# EUROPÄISCHE PATENTSCHRIFT

(11) **EP 2 367 703 B1**
(45) Veröffentlichungstag und Bekanntmachung des Hinweises auf die Patenterteilung: **09.01.2013**
(21) Anmeldenummer: 09755862.1
(22) Anmeldetag: 04.11.2009
(51) Int. Cl.: B60K 35/00

(54) **Vorrichtung, System und Verfahren zum autorisieren von Fahrzeug-Online-Diensten während der Fahrt**
Device, system, and method for authorizing vehicle online services during driving
Dispositif, système et procédé destinés à autoriser des services en ligne à bord d'un véhicule pendant la marche

(30) Priorität: 24.11.2008 DE 102008058632
(43) Veröffentlichungstag der Anmeldung: 28.09.2011
(73) Patentinhaber: Continental Automotive GmbH, 30165 Hannover (DE)
(72) Erfinder: FALK, Rainer, 85435 Erding (DE); KOHLMAYER, Florian, 82319 Starnberg (DE)
(86) Internationale Anmeldenummer: PCT/EP2009/064629
(87) Internationale Veröffentlichungsnummer: WO 2010/057776

(56) Entgegenhaltungen:
- WO-A-03/039914
- DE-B3- 10 302 924
- US-A1- 2004 083 032
- US-A1- 2007 234 223

## Beschreibung

Die Erfindung betrifft eine Vorrichtung, ein System und ein Verfahren zum Autorisieren von Fahrzeug-Online-Diensten wahrend der Fahrt.

Einige Funktionen eines Fahrzeugs wie zum Beispiel das Anzeigen eines Fernsehprogramms oder das Abspielen einer DVD, können während der Fahrt nicht genutzt werden, um den Fahrer nicht zu sehr abzulenken. Auch das Abrufen von Online-Diensten in einem internetfähigen Fahrzeug kann den Fahrer während der Fahrt erheblich ablenken. Einige Online-Dienste können jedoch auch für den Fahrer während der Fahrt wichtige Informationen wie Staumeldungen, Glatteiswarnungen oder Unwettervorhersagen bereitstellen.

Es ist bekannt, dass Online-Dienste in einem Fahrzeug nicht mehr genutzt werden können, sobald die Fahrgeschwindigkeit einen bestimmten Wert überschritten hat. Bekannt sind auch Sicherheitszonen, die Internetseiten gemäß bestimmter Zugriffsberechtigungen kategorisieren. Darüber hinaus existieren Einrichtungen, um Online-Anwendungen mitzuteilen, ob das Fahrzeug steht oder fährt, woraufhin aufgerufene Online-Anwendungen ihre Darstellung entsprechend anpassen.

Aus der US 2004/0083032 A1 ist es darüber hinaus bekannt, im Fahrzeug das Format, wie Design oder Farbgebung, einer Internet-Seite durch einen Dazenbearbeitungsprozess zu verändern und somit beispielsweise angepasst an die Fahrzeuggeschwindikgeit, Straßenbedingungen, Verkehrsdichte, Umgebungshelligkeit, Umgebungstemperatur und Wetter und dergleichen auf einer Anzeigeeinheit auszugeben.

Die bekannten Verfahren führen teilweise dazu, dass während der Fahrt durchaus nützliche Informationen dem Fahrer nicht zur Verfügung stehen.

Es ist daher die Aufgabe der vorliegenden Erfindung, dem Fahrer während der Fahrt wichtige und nützliche Informationen mitzuteilen, ohne jedoch die Fahrsicherheit zu beeinträchtigen.

Diese Aufgabe wird erfindungsgemäβ gelöst durch eine Vorrichtung, ein System und ein Verfahren mit den Merkmalen des jeweiligen unabhängigen Anspruchs. Vorteilhafte Ausgestaltungen und Weiterbildungen der Erfindung ergeben sich mit den Merkmalen der Unteransprüche.

Es wird eine Vorrichtung zum Autorisieren eines Online-Dienstes während der Fahrt in einem Fahrzeug vorgeschlagen, die eine elektronische Steuereinheit, eine graphische Ausgabeeinrichtung und eine Kommunikationsschnittstelle für einen drahtlosen Datenaustausch mit einem nicht im Fahrzeug befindlichen Server umfasst, wobei die Vorrichtung derart ausgelegt ist, dass sie bestimmte Inhalte eines aufgerufenen Online-Dienstes in Abhängigkeit des Fahrzustandes darstellt oder nicht darstellt.

Zusätzlich kann eine Sensoreinrichtung zur Erfassung der Verfassung des Fahrers eingerichtet sein, die beispielsweise durch Messen der Häufigkeit von Augenlidbewegungen Müdigkeit erkennt und durch einen Alkoholsensor erfasst, ob ein Konsum von Alkohol stattgefunden hat, um die Messergebnisse mit in die Autorisierung von Online-Diensten während der Fahrt einfließen zu lassen. Dadurch wird erreicht, dass ein Online-Dienst nur dann autorisiert wird, wenn die Anzeige des Online-Dienstes kein Risiko für die Aufmerksamkeit des Fahrers während der Fahrt darstellt.

Die graphische Ausgabeeinrichtung kann zum Beispiel als Sensorbildschirm ausgeführt sein, um ein schnelles und einfaches Aktivieren von Online-Diensten während der Fahrt zu ermöglichen.

Die Erfindung betrifft des Weiteren ein System zum Autorisieren eines Online-Dienstes während der Fahrt in einem Fahrzeug, das eine Vorrichtung und einen Server umfasst, der für den Datenaustausch über eine drahtlose Verbindung mit der Kommunikationsschnittstelle verbunden ist. Der Server wie auch die Kommunikationsschnittstelle sind ausgelegt für das Autorisieren von Online-Diensten während der Fahrt.

Ein Verfahren für das Autorisieren eines Online-Dienstes während der Fahrt in einem Fahrzeug, bei dem über einen drahtlosen Austausch bestimmte Inhalte eines Online-Dienstes in Abhängigkeit des Fahrzustandes autorisiert werden, sieht folgende Schritte vor:
Es wird der Fahrzustand des Fahrzeugs (1) erfasst. Abhängig vom Fahrzustand wird überprüft, ob ein abgerufener Online-Dienst oder bestimmte Inhalte eines abgerufenen Online-Dienstes für eine Anzeige während der Fahrt autorisiert sind. In Abhängigkeit vorliegender oder ermittelbarer Daten zur Autorisierbarkeit des abgerufenen Online-Dienstes während der Fahrt erfolgt entweder eine Sperrung oder eine eingeschränkte oder eine vollständige Autorisierung des abgerufenen Online-Dienstes. Das Ergebnis wird über eine graphische Ausgabeeinrichtung angezeigt, auf der der abgerufene Online-Dienst nicht abrufbar oder eingeschränkt abrufbar oder vollständig abrufbar dargestellt wird. Hierdurch ist sichergestellt, dass während der Fahrt kein Online-Dienst autorisiert und damit dargestellt wird, durch den der Fahrer eines Fahrzeugs von der Aufmerksamkeit für die Verkehrssituation abgelenkt wird.

Für den drahtlosen Datenaustausch zwischen Kommunikationsschnittstelle und Server kann ein GPRS-Netz, ein UMTS-Netz, eine WiMAX-Verbindung, ein anderes Mobilfunknetz oder ein WLAN verwendet werden. Damit kann ein bereits vorhandenes drahtloses Datenübertragungsnetz genutzt werden.

Die Autorisierungsinformation kann bei einer mit einem Netzwerkprotokoll zur sicheren Datenübertragung geschützten Kommunikation direkt als Attribut in ein Zertifikat eincodierbar sein. Über das SSL/TLS-Protokoll kann der Datenaustausch durch das zusätzliche 's' hinter 'http' als hyper text transfer protocol secure geschützt sein.

Auch eine Benutzerkonten zuordnende Zertifizierungsstelle, kann Zertifikate für Online-Dienste erteilen, die während der Fahrt sicher nutzbar sind. Die Zertifikate können in Abhängigkeit der Art und Herkunft eines Online-Dienstes oder nach Prüfung eines möglicherweise geeigneten Online-Dienstes erteilt werden. Ein Online-Dienst, der beispielsweise direkt von einem Automobilhersteller oder einem Kraftfahrzeug-Verband unter spezieller Berücksichtigung der Aufmerksamkeit des Fahrers für den Verkehr bereitgestellt wird, kann als während der Fahrt sicher nutzbar eingestuft sein.

Informationen zur Nutzbarkeit eines Online-Dienstes während der Fahrt können über zuletzt von der Laufzeitumgebung gespeicherte Autorisierungen oder gespeicherte Konfigurationen durch Vergleich der Herkunftsdaten im Netz mit definierten Mustern eingeholt werden. Von der Laufzeit bereits gespeicherte Autorisierungen oder gespeicherte Konfigurationen durch einen Vergleich von URLs mit definierten Mustern liefern Informationen über die Nutzbarkeit eines Online-Dienstes während der Fahrt, wobei die definierten Muster fest vorgegeben oder von einer Werkstatt oder von einem Nutzer selbst konfiguriert werden können.

Um eine fahrzustandsabhängige Anpassung der vom Server übertragenen Informationsdaten zu ermöglichen, kann beim Senden einer Nachricht oder einer Anfrage für das Herunterladen eines Online-Dienstes der Fahrzustand mit übertragen werden.

In einer vorteilhaften Weiterbildung kann ein URL-Rewrite erfolgen, sobald sich der Fahrzustand verändert hat. Die Laufzeitumgebung kann also bei einer Änderung des Fahrzustands eine Neufassung der Herkunftsdaten im Netz erstellen, woraufhin der ausgewählte Online-Dienst fahrzustandsabhängig alle, nur bestimmte oder gar keine Inhalte bereitstellt.

Alternativ kann ein Online-Dienst, der dynamische Inhalte enthält, den aktuellen Fahrzeugstatus abfragen und seine Darstellung entsprechend anpassen. Bei einer Änderung des Fahrzustandes kann die Laufzeitumgebung auch ein erneutes Laden einer Webseite oder einen Neustart eines laufenden Programms veranlassen, damit die Darstellung umgehend den veränderten Bedingungen angepasst wird.

Eine Abfrage der Autorisierungsinformationen kann auch von einem speziell dazu eingerichteten Server erfolgen. Damit sind Online-Dienstanbieter für die fahrzustandsabhängige Einteilung ihrer Online-Dienste nicht mehr zuständig.

Während der Fahrt können nur in der Steuereinheit gespeicherte Online-Dienste anwählbar sein. Um die Aufmerksamkeit des Fahrers während der Fahrt nicht durch die manuelle Eingabe einer nicht gespeicherten Webseite abzulenken, kann während der Fahrt nur auf bereits gespeicherte Online-Dienste zugegriffen werden.

Ein Abruf von während der Fahrt zugelassenen Online-Diensten kann über ein Menü oder einen Softkey - eine Taste, die abhängig von einer Bildschirmanzeige unterschiedliche Funktionen ausführt - oder eine Spracherkennung erfolgen, um die Aufmerksamkeit des Fahrers während der Fahrt so geringfügig wie möglich zusätzlich zu beanspruchen.

Während der Fahrt nicht zugelassene Online-Dienste können als deaktiviert, zum Beispiel grau unterlegt, angezeigt werden. Dadurch erkennt der Fahrer sofort welche der aufgerufenen Online-Dienste während der Fahrt nicht angezeigt werden können.

Nicht nur abgefragte, auch eingehende Nachrichten und Informationen zum Beispiel in Form einer SMS können fahrzustandsabhängig angezeigt oder nicht angezeigt werden.

Bei eingehenden Nachrichten und Informationen kann die Adresse des Absenders entweder bei Bestehen einer autorisierten Verbindung zum Server unter Heranziehung des SSL/TLS-Protokolls oder durch ein digitales Zertifikat, das den Sender autorisiert, überprüft werden.

Für eine Anzeige während der Fahrt kann bei eingehenden Nachrichten und Informationen auch die Nachricht selbst unter Verwendung eines digitalen Zertifikats digital signiert ist. Nur von einem Anbieter digital signierte und anhand des Zertifikats als während der Fahrt verwendbar eingestufte, nachladbare Anwendungssoftware kann während der Fahrt ausgeführt werden. Statt in das Zertifikat kann diese Information auch als Meta-Information der nachladbaren Anwendungssoftware, beispielsweise als Manifest-Datei eingetragen sein. So können bestimmte Anwendungen zwar weiterlaufen, erhalten jedoch keinen Zugriff über den Sensorbildschirm.

In einer vorteilhaften Weiterbildung kann eine weitere Einteilung einer Online-Dienst-Tauglichkeit während der Fahrt in Abhängigkeit von der Höhe der aktuell gefahrenen Geschwindigkeit erfolgen. Bis zum Beispiel 50 km/h und für einen weiteren Grenzwert bis zum Beispiel 100 km/h werden bestimmte Inhalte von Online-Diensten noch vollständig, nur eingeschränkt oder nicht mehr autorisiert.

Ausführungsbeispiele der Erfindung werden nachfolgend anhand der Figuren 1 bis 7 erklärt. Es zeigen:
- Fig. 1: eine schematische Darstellung eines Systems vorgeschlagener Art mit einem Fahrzeug, einer Steuereinheit, einer Kommunikationseinrichtung, einer graphischen Ausgabeeinrichtung, einem drahtlosen Datenübertragungsnetz und einem Server,
- Fig. 2: ein Flussdiagramm, das einen Datenaustausches zwischen einem Fahrzeug und einem Server ohne Übermittlung des Fahrzustandes zeigt,
- Fig. 3: in entsprechender Darstellung einen Datenaustausch zwischen einem Fahrzeug und einem Server mit Übermittlung des Fahrzustandes,
- Fig. 4: eine schematische Darstellung der erfindungsgemäß ausgeführten graphischen Ausgabeeinheit mit einem aufgerufenen Online-Dienst bei einem stehenden Fahrzeug,
- Fig. 5: eine entsprechende Darstellung mit einem aufgerufenen und während der Fahrt autorisierten Online-Dienst bei einem fahrenden Fahrzeug,
- Fig. 6: eine entsprechende Darstellung mit einem aufgerufenen und während der Fahrt nicht autorisierten Online-Dienst bei einem stehenden Fahrzeug und
- Fig. 7: eine entsprechende Darstellung mit einem aufgerufenen und während der Fahrt nicht autorisierten Online-Dienst bei einem fahrenden Fahrzeug.

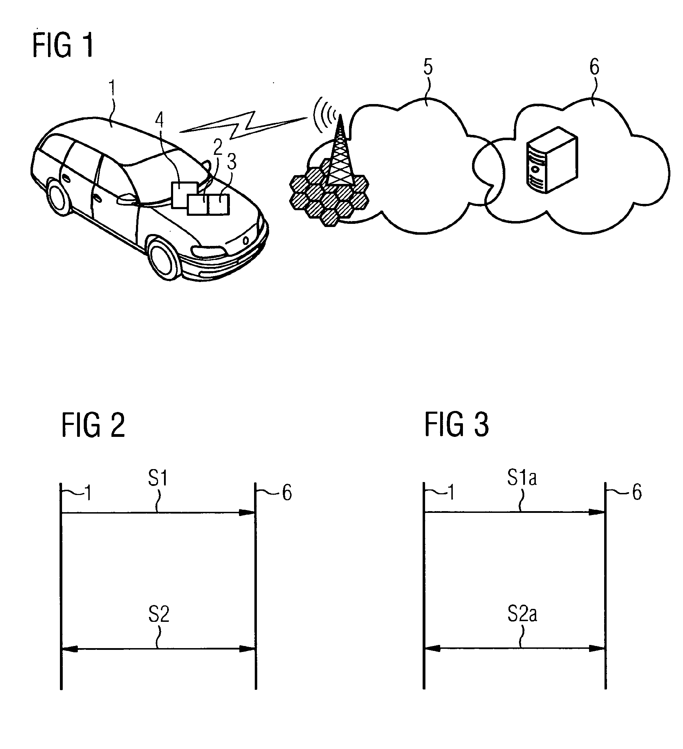

Fig. 1 zeigt eine schematische Darstellung eines Systems mit einem Fahrzeug 1, einer Steuereinheit 2, einer Kommunikationsschnittstelle 3, einer graphischen Ausgabeeinrichtung 4, einem drahtlosen Datenübertragungsnetz 5 und einem Server 6. Die Steuereinheit 2, die Kommunikationsschnittstelle 3 und die graphische Ausgabeeinrichtung 4 befinden sich in dem Fahrzeug 1 und bilden eine erfindungsgemäße Vorrichtung. Das Steuergerät 2 ist mit der Kommunikationseinheit 3 und der graphischen Ausgabeeinrichtung 4 verbunden und die Kommunikationsschnittstelle 3 steht über das drahtlose Datenübertragungsnetz 5 mit dem Server 6 in Verbindung, wobei der drahtlosen Datenaustausch über ein GPRS-Netz, ein UMTS-Netz, eine WiMAX-Verbindung, ein anderes Mobilfunknetz oder ein WLAN erfolgt. Die erfindungsgemäße Vorrichtung ist in der Lage bestimmte Inhalte eines aufgerufenen Online-Dienstes in Abhängigkeit des Fahrzustandes über die graphische Ausgabeeinheit 4, die zum Beispiel als Sensorbildschirm ausgeführt ist, darzustellen oder nicht darzustellen. Der Online-Dienst kann zum Beispiel ein Fernsehprogramm, eine Internetseite oder ein weiterer Informationsdienst sein, der über eine drahtlose Verbindung bereitgestellt wird. Der Fahrzustand ist definiert durch eine Fahrgeschwindigkeit, die oberhalb von 3 km/h oder bevorzugt oberhalb von 10 km/h oder besonders bevorzugt oberhalb von 15 km/h liegt. Zudem kann die Vorrichtung eine Sensoreinrichtung umfassen, die für ein Autorisieren von Online-Diensten während der Fahrt zusätzlich die allgemeine Verfassung des Fahrers im Hinblick auf Müdigkeit und Alkoholkonsum erfasst.

Ein Verfahren für das Autorisieren eines Online-Dienstes während der Fahrt sieht folgende Schritte vor: Es wird der Fahrzustand des Fahrzeugs (1) erfasst. Abhängig vom Fahrzustand wird überprüft, ob ein abgerufener Online-Dienst oder bestimmte Inhalte eines abgerufenen Online-Dienstes für eine Anzeige während der Fahrt autorisiert sind. In Abhängigkeit vorliegender oder ermittelbarer Daten zur Autorisierbarkeit des abgerufenen Online-Dienstes während der Fahrt erfolgt entweder eine Sperrung oder eine eingeschränkte oder eine vollständige Autorisierung des abgerufenen Online-Dienstes. Das Ergebnis wird über eine graphische Ausgabeeinrichtung 4 dargestellt.

Fig. 2 zeigt als Flussdiagramm einen Datenaustausch zwischen dem Fahrzeug 1 und dem Server 6 ohne Übermittlung des Fahrzustandes, gemäß dem Stand der Technik. In einem Schritt S1 wird von dem Fahrzeug 1 eine Anfrage für das Anzeigen eines Online-Dienstes an den Server 6 gerichtet. Der Server 6 reagiert und sendet in einem Schritt S2 die angefragten Daten des Online-Dienstes an das Fahrzeug 1 und es folgt ein Austausch von Daten zwischen dem Server 6 und dem Fahrzeug 1.

Fig. 3 zeigt in entsprechender Darstellung einen Datenaustausch zwischen Fahrzeug 1 und Server 6 mit Übermittlung des Fahrzustandes. Zusammen mit der Anfrage für das Anzeigen eines Online-Dienstes wird von dem Fahrzeug 1 in einem Schritt S1a erfindungsgemäß auch der Fahrzustand an den Server 6 gesendet. Anhand der Information über den Fahrzustand des Fahrzeugs 1 prüft der Server 6 ob der angefragte Online-Dienst vollständig, nur mit bestimmten Inhalten oder gar nicht an das Fahrzeug 1 gesendet wird.

Für die Autorisierung kann die Autorisierungsinformation bei einer mit einem Netzwerkprotokoll zur sicheren Datenübertragung geschützten Kommunikation direkt als Attribut in ein Zertifikat eincodierbar sein. Über das SSL/TLS-Protokoll kann der Datenaustausch durch das zusätzliche 's' hinter 'http' als hyper text transfer protocol secure geschützt sein.

Auch eine Benutzerkonten zuordnende Zertifizierungsstelle, kann Zertifikate für Online-Dienste erteilen, die während der Fahrt sicher nutzbar sind. Die Zertifikate können in Abhängigkeit der Art und Herkunft eines Online-Dienstes oder nach Prüfung eines möglicherweise geeigneten Online-Dienstes erteilt werden. Ein Online-Dienst, der direkt von einem Automobilhersteller oder einem Kraftfahrzeug-Verband unter spezieller Berücksichtigung der Aufmerksamkeit des Fahrers für den Verkehr bereitgestellt wird, kann als während der Fahrt sicher nutzbarer eingestuft sein.

Informationen zur Nutzbarkeit eines Online-Dienstes während der Fahrt können auch über zuletzt von der Laufzeitumgebung gespeicherte Autorisierungen oder gespeicherte Konfigurationen durch Vergleich der Herkunftsdaten im Netz mit definierten Mustern eingeholt werden. Von der Laufzeit bereits gespeicherte Autorisierungen oder gespeicherte Konfigurationen durch einen Vergleich von URLs mit definierten Mustern liefern Informationen über die Nutzbarkeit eines Online-Dienstes während der Fahrt, wobei die definierten Muster fest vorgegeben oder von einer Werkstatt oder von einem Nutzer selbst konfiguriert werden können.

Um eine fahrzustandsabhängige Anpassung der vom Server 6 übertragenen Informationsdaten zu ermöglichen, kann beim Senden einer Nachricht oder einer Anfrage für das Herunterladen eines Online-Dienstes der Fahrzustand mit übertragen werden.

Des Weiteren kann ein URL-Rewrite erfolgen, sobald sich der Fahrzustand verändert hat. Alternativ kann auch ein erneutes Laden der Informationsdaten (Reload) vom Server 6 erfolgen. Die Laufzeitumgebung kann also bei einer Änderung des Fahrzustands eine Neufassung der Herkunftsdaten im Netz erstellen, woraufhin der ausgewählte Online-Dienst fahrzustandsabhängig alle, nur bestimmte oder gar keine Inhalte bereitstellt.

Alternativ kann ein Online-Dienst, der dynamische Inhalte enthält, den aktuellen Fahrzeugstatus abfragen und seine Darstellung entsprechend anpassen.

Eine Abfrage der Autorisierungsinformationen kann auch von einem speziell dazu eingerichteten zusätzlichen Server erfolgen.

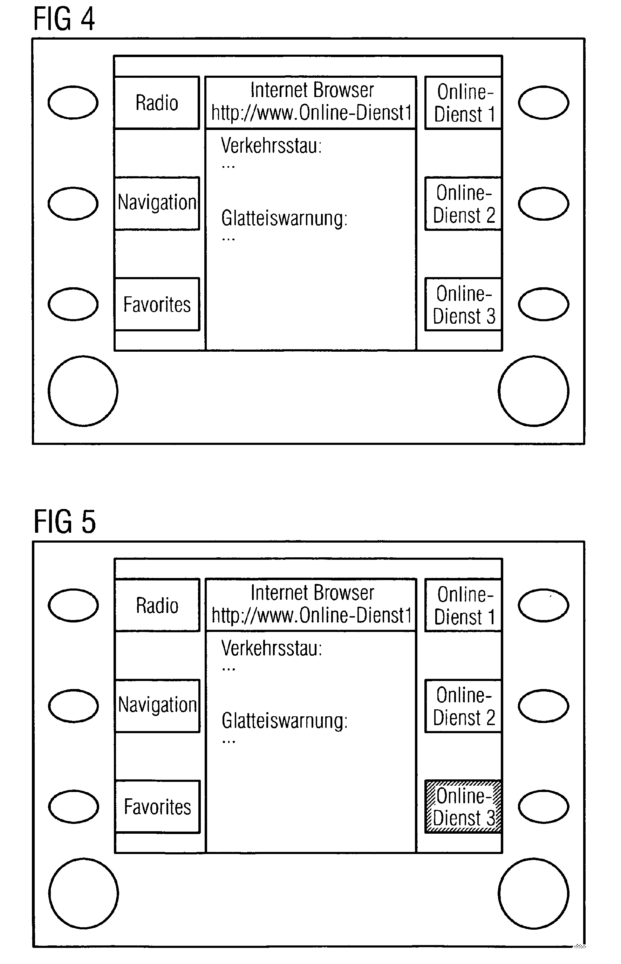

Fig. 4 zeigt eine schematische Darstellung der erfindungsgemäß ausgeführten graphischen Ausgabeeinheit 4 mit einem aufgerufenen Online-Dienst bei einem stehenden Fahrzeug 1. In diesem Fall wird der aufgerufene Online-Dienst vollständig dargestellt und es ist keine Autorisierung erforderlich.

Fig. 5 zeigt eine entsprechende Darstellung mit einem aufgerufenen und während der Fahrt autorisierten Online-Dienst bei einem fahrenden Fahrzeug 1. Während Online-Dienst 1 und Online-Dienst 2 für ein Aufrufen während der Fahrt autorisiert sind, trifft dies für Online-Dienst 3 nicht zu, d. h., Online-Dienst 3 ist während der Fahrt nicht abrufbar und erschient daher auf der Anzeige grau unterlegt.

Während der Fahrt sind nur in der Steuereinheit 2 gespeicherte Online-Dienste anwählbar. Um die Aufmerksamkeit des Fahrers während der Fahrt so geringfügig wie möglich zu beanspruchen, kann ein Abruf von während der Fahrt zugelassenen Online-Diensten über ein Menü, einen Soft Key oder eine Spracherkennung erfolgen.

Online-Dienste, die während der Fahrt nicht zugelassen sind, werden als deaktiviert, zum Beispiel grau unterlegt, angezeigt.

Nicht nur abgefragte, auch eingehende Nachrichten und Informationen zum Beispiel in Form einer SMS können fahrzustandsabhängig angezeigt oder nicht angezeigt werden. Bei eingehenden Nachrichten und Informationen kann die Adresse des Absenders entweder bei Bestehen einer autorisierten Verbindung zum Server unter Heranziehung des SSL/TLS-Protokolls oder durch ein digitales Zertifikat, das den Sender autorisiert, überprüft werden. Für eine Anzeige während der Fahrt kann bei eingehenden Nachrichten und Informationen auch die Nachricht selbst unter Verwendung eines digitalen Zertifikats digital signiert ist.

Nur von einem Anbieter digital signierte und anhand des Zertifikats als während der Fahrt verwendbar eingestufte, nachladbare Anwendungssoftware kann während der Fahrt ausgeführt werden. Bestimmte Anwendungen können zwar weiterlaufen, erhalten jedoch keinen Zugriff über die graphische Ausgabeeinheit 4.

Zusätzlich kann eine weitere Einteilung einer Online-Dienst-Tauglichkeit während der Fahrt in Abhängigkeit von der Höhe der aktuell gefahrenen Geschwindigkeit erfolgen. Bis zum Beispiel 50 km/h und für einen weiteren Grenzwert bis zum Beispiel 100 km/h werden bestimmte Inhalte von Online-Diensten noch vollständig, nur eingeschränkt oder nicht mehr autorisiert.

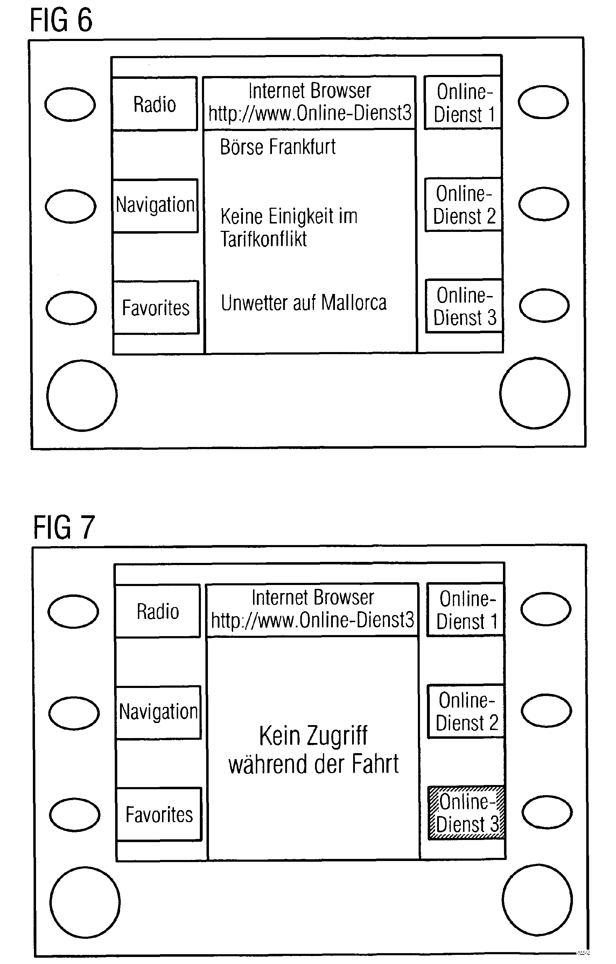

Fig. 6 zeigt eine entsprechende Darstellung mit einem aufgerufenen und während der Fahrt nicht autorisierten Online-Dienst bei einem stehenden Fahrzeug 1. Ausschließlich in diesem Fall wird auch der während der Fahrt nicht autorisierte Online-Dienst vollständig dargestellt und es ist keine Autorisierung erforderlich. Bei einer Änderung des Fahrzustandes kann die Laufzeitumgebung erfindungsgemäß ein erneutes Laden einer Webseite oder einen Neustart eines laufenden Programms veranlassen, um die Darstellung umgehend den veränderten Bedingungen anzupassen.

Fig. 7 zeigt eine entsprechende Darstellung mit einem aufgerufenen und während der Fahrt nicht autorisierten Online-Dienst bei einem fahrenden Fahrzeug 1. Wird ein während der Fahrt nicht autorisierbarer Online-Dienst dennoch während der Fahrt aufgerufen, erscheint auf der graphischen Ausgabeeinrichtung die Anzeige 'Kein Zugriff während der Fahrt'.

## Patentansprüche

1. Verfahren zum Autorisieren eines Online-Dienstes während der Fahrt in einem Fahrzeug (1), bei dem über einen drahtlosen Austausch mit einem nicht im Fahrzeug befindlichen Server (6) bestimmte Inhalte eines Online-Dienstes in Abhängigkeit des Fahrzustandes autorisiert werden, **dadurch gekennzeichnet, dass** es folgende Schritte umfasst:
- es wird der Fahrzustand des Fahrzeug (1) erfasst,
- abhängig vom Fahrzustand wird überprüft, ob bestimmte Inhalte eines abgerufenen Online-Dienstes für eine Anzeige wahrend der Fahrt autorisiert sind,
- in Abhängigkeit vorliegender oder ermittelbarer Daten zur Autorisierbarkeit des abgerufenen Online-Dienstes während der Fahrt erfolgt entweder eine Sperrung oder eine eingeschränkte oder eine vollständige Autorisierung des abgerufenen Online-Dienstes,
- das Ergebnis des Autorisierungsverfahrens wird über eine graphische Ausgabeeinrichtung (4), auf der der abgerufene Online-Dienst nicht abrufbar oder eingeschränkt abrufbar oder vollständig abrufbar ist, dargestellt.

2. Verfahren nach Anspruch 1, **dadurch gekennzeichnet, dass** für den drahtlosen Datenaustausch ein GPRS-Netz, ein UMTS-Netz, eine MiMAX-Verbindung, ein anderes Mobilfunknetz oder ein WLAN verwendet wird.

3. Verfahren nach einem der Ansprüche 1 oder 2, **dadurch gekennzeichnet, dass** die Autorisierungsinformation bei einer mit einem Netzwerkprotokoll zur sicheren Datenübertragung geschützten Kommunikation direkt als Attribut in ein Zertifikat eincodierbar ist.

4. Verfahren nach einem der Ansprüche 1 bis 3, **dadurch gekennzeichnet, dass** auch eine Benutzerkonten zuordnence Zertifizierungsstelle, Zertifikate für Online-Dienste erteilt, die während der Fahrt sicher nutzbar sind.

5. Verfahren nach einen der Ansprüche 1 bis 4, **dadurch gekennzeichnet, dass** die Zertifikate in Abhängigkeit der Art und Herkunft eines Online-Dienstes oder nach Prüfung eines möglicherweise geeigneten Online-Dienstes erteilt werden.

6. Verfahren nach einem der Ansprüche 1 bis 5, **dadurch gekennzeichnet, dass** Informationen zur Nutzbarkeit eines Online-Dienstes während der Fahrt über zuletzt von der Laufzeitumgebung gespeicherte Autorisierungen oder gespeicherte Konfigurationen durch Vergleich der Herkunftsdaten im Netz mit definierten Mustern eingeholt werden.

7. Verfahren nach einem der Ansprüche 1 bis 6, **dadurch gekennzeichnet, dass** die definierten Muster fest vorgegeben oder von einer Werkstatt oder von einem Nutzer selbst konfiguriert werden.

8. Verfahren nach einem der Ansprüche 1 bis 7, **dadurch gekennzeichnet, dass** beim Senden einer Nachricht oder einer Anfrage für das Herunterladen eines Online-Dienstes der Fahrzustand mit übertragen wird.

9. Verfahren nach einem der Ansprüche 1 bis 8, **dadurch gekennzeichnet, dass** die Laufzeitumgebung bei einer Änderung des Fahrzustands eine Neufassung der Herkunftsdaten im Netz erstellt, woraufhin der ausgewählte Online-Dienst fahrzustandsabhängig alle, nur bestimmte oder gar keine Inhalte bereitstellt.

10. Verfahren nach einem der Ansprüche 1 bis 9, **dadurch gekennzeichnet, dass** ein Online-Dienst, der dynamische Inhalte enthalt, den aktuellen Fahrzeugstatus abfragt und die Darstellung des Online-Dienstes entsprechend anpasst.

11. Verfahren nach einem der Ansprüche 1 bis 10, **dadurch gekennzeichnet, dass** die Laufzeitumgebung ein erneutes Laden einer Webseite oder einen Neustart eines laufenden Programms veranlasst, sobald sich der Fahrzustand des Fahrzeugs (1) verändert.

12. Verfahren nach einem der Ansprüche 1 bis 11, **dadurch gekennzeichnet, dass** während der Fahrt nur in der Steuereinheit (2) gespeicherte Online-Dienste anwahlbar sind.

13. Verfahren nach einem der Ansprüche 1 bis 12, **dadurch gekennzeichnet, dass** ein Abruf von während der Fahrt zugelassenen Online-Diensten über ein Menü oder einen Soft Key oder eine Spracherkennung erfolgt.

14. Verfahren nach einem der Ansprüche 1 bis 13, d a - **durch gekennzeichnet,** dass während der Fahrt nicht zugelassene Online-Dienste als deaktiviert, beispielsweise grau unterlegt, angezeigt werden.

15. Verfahren nach einem der Ansprüche 1 bis 14, **dadurch gekennzeichnet, dass** nicht nur abgefragte, sondern auch eingehende Nachrichten und Informationen fahrzustandsabhängig angezeigt oder nicht angezeigt werden.

16. Verfahren nach einem der Ansprüche 1 bis 15, **dadurch gekennzeichnet, dass** bei eingehenden Nachrichten und Informationen die Adresse des Absenders entweder bei Bestehen einer autorisierten Verbindung zum Server (6) unter Heranziehung des Netzwerkprotokolls zur sicheren Datenübertragung oder durch ein digitales Zertifikat, das den Sender autorisiert, überprüft wird.

17. Verfahren nach einem der Ansprüche 1 bis 16, **dadurch gekennzeichnet, dass** bei eingehenden Nachrichten und Informationen die Nachricht selbst unter Verwendung eines digitalen Zertifikats digital signiert ist.

18. Verfahren nach einem der Ansprüche 1 bis 17, **dadurch gekennzeichnet, dass** nur von einem Anbieter digital signierte und anhand des Zertifikats als während der Fahrt verwendbar eingestufte, nachladbare Anwendungssoftware während der Fahrt ausführbar ist.

19. Verfahren nach einem der Ansprüche 1 bis 18, **dadurch gekennzeichnet, dass** eine Abfrage der Autorisierungsinformationen von einem speziell dazu eingerichteten Server erfolgt.

20. Verfahren nach einem der Ansprüche 1 bis 19, **dadurch gekennzeichnet, dass** eine weitere Einteilung einer Online-Dienst-Tauglichkeit während der Fahrt in Abhängigkeit von der Höhe der gefahrenen Geschwindigkeit erfolgt.

21. Vorrichtung zum Autorisieren eines Online-Dienstes während der Fahrt in einem Fahrzeug (1), umfassend eine elektronische Steuereinheit (2), die zur Durchführung des Verfahrens nach einem der vorhergehenden Ansprüche ausgelegt ist, eine graphische Ausgabeeinrichtung (4) und eine Kommunikationsschnittstelle (3) für einen drahtlosen Datenaustausch mit einem nicht im Fahrzeug (1) befindlichen Server (6).

22. Vorrichtung nach Anspruch 21, **dadurch gekennzeichnet, dass** zusätzlich eine Sensoreinrichtung zur Erfassung der Verfassung des Fahrers vorhanden ist.

23. Vorrichtung nach Anspruch 21 oder 22, **dadurch gekennzeichnet, dass** die graphische Ausgabeeinrichtung (4) als Sensorbildschirm ausgeführt ist.

24. System zum Autorisieren eines Online-Dienstes während der Fahrt in einem Fahrzeug (1), umfassend eine Vorrichtung nach einem der Ansprüche 21 bis 23 sowie einen nicht im Fahrzeug befindlichen Server (6), der für den Datenaustausch über eine drahtlose Verbindung mit der Kommunikationsschnittstelle (3) verbunden ist.

## Claims

1. Method for authorizing an online service in the course of driving in a vehicle (1), in which wireless interchange with a server (6) which is not situated in the vehicle is used to authorize particular contents of an online service on the basis of the driving state, **characterized in that** it comprises the following steps:
- the driving state of the vehicle (1) is detected,
- the driving state is taken as a basis for checking whether particular contents of a retrieved online service are authorized for display in the course of driving,
- available or ascertainable data relating to the authorizability of the retrieved online service in the course of driving are taken as a basis for either blocking or restrictedly or completely authorizing the retrieved online service,
- the result of the authorization method is displayed via a graphical output device (4) on which the retrieved online service cannot be retrieved or can be retrieved restrictedly or can be retrieved completely.

2. Method according to Claim 1, **characterized in that** a GPRS network, a UMTS network, a WiMAX connection, another mobile radio network or a WLAN is used for the wireless data interchange.

3. Method according to one of Claims 1 and 2, **characterized in that** the authorization information can be encoded into a certificate directly as an attribute in the case of communication which is protected using a network protocol for secure data transmission.

4. Method according to one of Claims 1 to 3, **characterized in that** a certification center allocating user accounts also issues certificates for online services which can be used safely in the course of driving.

5. Method according to one of Claims 1 to 4, **characterized in that** the certificates are issued on the basis of the nature and origin of an online service or after checking a possibly suitable online service.

6. Method according to one of Claims 1 to 5, **characterized in that** information relating to the useability of an online service in the course of driving is fetched using authorizations recently stored by the runtime environment, or stored configurations, by comparing the origin data in the network with defined patterns.

7. Method according to one of Claims 1 to 6, **characterized in that** the defined patterns are firmly prescribed or are configured by a workshop or by a user himself.

8. Method according to one of Claims 1 to 7, **characterized in that** when a message or a request for download of an online service is sent, the driving state is transmitted as well.

9. Method according to one of Claims 1 to 8, **characterized in that** the runtime environment creates a new version of the origin data in the network when the driving state changes, whereupon the selected online service provides all, only particular or absolutely no contents on the basis of the driving state.

10. Method according to one of Claims 1 to 9, **characterized in that** an online service which contains dynamic contents requests the current vehicle status and customizes the presentation of the online service accordingly.

11. Method according to one of Claims 1 to 10, **characterized in that** the runtime environment prompts reloading of a web page or restarting of a running program as soon as the driving state of the vehicle (1) changes.

12. Method according to one of Claims 1 to 11, **characterized in that** in the course of driving it is only possible to dial up online services which are stored in the control unit (2).

13. Method according to one of Claims 1 to 12, **characterized in that** online services which are permitted in the course of driving are retrieved using a menu or a softkey or voice recognition.

14. Method according to one of Claims 1 to 13, **characterized in that** online services which are not permitted in the course of driving are displayed as deactivated, for example on a grey background.

15. Method according to one of Claims 1 to 14, **characterized in that** not only requested messages and information but also incoming messages and information are displayed or not displayed on the basis of driving state.

16. Method according to one of Claims 1 to 15, **characterized in that** in the case of incoming messages and information the address of the sender is checked either using the network protocol for secure data transmission when there is an authorized connection to the server (6) or by means of a digital certificate which authorizes the transmitter.

17. Method according to one of Claims 1 to 16, **characterized in that** in the case of incoming messages and information the message itself is digitally signed using a digital certificate.

18. Method according to one of Claims 1 to 17, **characterized in that** only subsequently loadable application software which has been digitally signed by a provider and which is classified as being able to be used in the course of driving by virtue of the certificate can be executed in the course of driving.

19. Method according to one of Claims 1 to 18, **characterized in that** a request for the authorization information is made by a server which is set up specifically for that purpose.

20. Method according to one of Claims 1 to 19, **characterized in that** further grading of online service suitability in the course of driving is performed on the basis of the level of the speed of travel.

21. Apparatus for authorizing an online service in the course of driving in a vehicle (1), comprising an electronic control unit (2), which is designed for carrying out the method according to one of the preceding claims, a graphical output device (4) and a communication interface (3) for wireless data interchange with a server (6) which is not situated in the vehicle (1).

22. Apparatus according to Claim 21, **characterized in that** additionally a sensor device is present for capturing the condition of the driver.

23. Apparatus according to Claim 21 or 22, **characterized in that** the graphical output device (4) is in the form of a sensor screen.

24. System for authorizing an online service in the course of driving in a vehicle (1), comprising an apparatus according to one of Claims 21 to 23 and also a server (6) which is not situated in the vehicle and which is connected to the communication interface (3) for the purpose of data interchange via a wireless link.

## Revendications

1. Procédé d'autorisation d'un service en ligne pendant la marche dans un véhicule (1) automobile, dans lequel, par un échange sans fil avec un serveur (6) ne se trouvant pas dans le véhicule, on autorise des contenus déterminés d'un service en ligne en fonction de l'état de marche, **caractérisé en ce qu'**il comprend les stades suivants :
- on détecte l'état de marche du véhicule (1),
- en fonction de l'état de marche, on contrôle si des contenus déterminés d'un service en ligne appelé sont autorisés pour un affichage pendant la marche,
- en fonction de données présentes ou pouvant être déterminées pour la possibilité d'autoriser le service en ligne appelé pendant la marche, il s'effectue un blocage ou une autorisation limitée ou une autorisation complète du service en ligne appelé,
- le résultat du procédé d'autorisation est représenté par un dispositif (4) d'édition graphique, sur lequel le service en ligne appelé ne peut pas être appelé ou peut être appelé de manière limitée ou peut être appelé complètement.

2. Procédé suivant la revendication 1, **caractérisé en ce que**, pour l'échange de données sans fil, on utilise un réseau GPRS, un réseau UMTS, une liaison W1MAX, un autre réseau de radiotéléphonie mobile ou un WLAN.

3. Procédé suivant l'une des revendications 1 ou 2, **caractérisé en ce que** l'information d'autorisation peut, pour une communication protégée par un protocole de réseau pour la transmission sécurisée de données, être codée directement en un certificat comme attribut.

4. Procédé suivant l'une des revendications 1 à 3, **caractérisé en ce qu'**un point de certification, associé à un compte d'utilisateur, délivre aussi des certificats pour des services en ligne, qui peuvent être utilisés d'une manière sûre pendant la marche.

5. Procédé suivant l'une des revendications 1 à 4, **caractérisé en ce que** les certificats sont délivrés en fonction du type et de l'origine des services en ligne ou après contrôle d'un service en ligne éventuellement approprié.

6. Procédé suivant l'une des revendications 1 à 5, **caractérisé en ce que** l'on va chercher, par comparaison des données d'origine dans le réseau à des modèles définis, des informations sur la possibilité d'utiliser un service en ligne pendant la marche par des autorisations mémorisées en dernier par l'environnement du temps de marche ou par des configurations mémorisées.

7. Procédé suivant l'une des revendications 1 à 6, **caractérisé en ce que** l'on prescrit de manière fixe des modèles définis ou ils sont configurés par un atelier ou par un utilisateur soi-même.

8. Procédé suivant l'une des revendications 1 à 7, **caractérisé en ce que**, lors de l'émission d'un message ou lors d'une demande de chargement d'un service en ligne, on transmet l'état de marche.

9. Procédé suivant l'une des revendications 1 à 8, **caractérisé en ce que** l'environnement du temps de marche établit, s'il y a une modification de l'état de marche, une version nouvelle des données d'origine dans le réseau, après quoi le service en ligne sélectionné met à disposition, en fonction de l'état de marche, tous les contenus, seulement certains contenus ou pas de contenu du tout.

10. Procédé suivant l'une des revendications 1 à 9, **caractérisé en ce qu'**un service en ligne, qui contient des contenus dynamiques, demande le statut présent du véhicule et adapte en conséquence la représentation du service en ligne.

11. Procédé suivant l'une des revendications 1 à 10, **caractérisé en ce que** l'environnement du temps de marche provoque une charge renouvelée d'une page Web ou un début renouvelé d'un programme lancé, dès que l'état de marche du véhicule (1) se modifie.

12. Procédé suivant l'une des revendications 1 à 11, **caractérisé en ce que** pendant la marche, seulement des services en ligne mémorisés dans l'unité (2) de commande peuvent être sélectionnés.

13. Procédé suivant l'une des revendications 1 à 12, **caractérisé en ce qu'**un appel de services en ligne autorisé pendant la marche s'effectue par un menu ou par une Soft Key ou par une reconnaissance vocale.

14. Procédé suivant l'une des revendications 1 à 13, **caractérisé en ce que** les services en ligne non-autorisés pendant la marche sont affichés comme désactivés, en étant par exemple parangonner en gris.

15. Procédé suivant l'une des revendications 1 à 14, **caractérisé en ce que** l'on affiche ou l'on n'affiche pas, en fonction de l'état de marche, des messages et des informations non seulement demandés, mais aussi entrants.

16. Procédé suivant l'une des revendications 1 à 15, **caractérisé en ce que**, pour des messages et des informations entrants, on contrôle les adresses de l'émetteur, soit en constituant une liaison autorisée avec le serveur (6), soit en tirant parti du protocole du réseau pour la transmission sécurisée de données ou par un certificat numérique, qui autorise l'émetteur.

17. Procédé suivant l'une des revendications 1 à 16, **caractérisé en ce que**, pour des messages et des informations entrants, on signe le message soi-même numériquement en utilisant un certificat numérique.

18. Procédé suivant l'une des revendications 1 à 17, **caractérisé en ce que** seuls peuvent être réalisés pendant la marche des logiciels d'application rechargeables signés numériquement par un sous-missionnaire et classés comme utilisables pendant la marche au moyen du certificat.

19. Procédé suivant l'une des revendications 1 à 18, **caractérisé en ce qu'**une demande des informations d'autorisation est effectuée par un serveur conçu spécialement à cet effet.

20. Procédé suivant l'une des revendications 1 à 19, **caractérisé en ce qu'**une division supplémentaire d'une validité du service en ligne est effectuée pendant la marche en fonction du niveau de la vitesse dangereuse.

21. Dispositif d'autorisation d'un service en ligne pendant la marche dans un véhicule (1) automobile, comprenant une unité (2) électronique de commande, qui est conçue pour effectuer le procédé suivant l'une des revendications précédentes, un dispositif (4) d'édition graphique et une interface (3) de communication pour un échange de données sans fil avec un serveur (6) ne se trouvant pas dans le véhicule (1).

22. Dispositif suivant la revendication 21, **caractérisé en ce qu'**il y a, en outre, un dispositif capteur pour la détection de la disposition du conducteur.

23. Dispositif suivant la revendication 21 ou 22, **caractérisé en ce que** le dispositif (4) d'édition graphique est réalisé en écran capteur.

24. Système d'autorisation d'un service en ligne pendant la marche dans un véhicule (1) automobile, comprenant un dispositif suivant l'une des revendications 21 à 23 ainsi qu'un serveur (6) qui ne se trouve pas dans le véhicule et qui est relié pour l'échange de données à l'interface (3) de communication par une liaison sans fil.
